# EUROPEAN PATENT SPECIFICATION

(11) **EP 3 653 982 B1**
(45) Date of publication and mention of the grant of the patent: **16.06.2021**
(21) Application number: 19208342.6
(22) Date of filing: 11.11.2019
(51) Int. Cl.: F28F 3/12, F28F 9/02, H01M 10/6556

(54) **ARRANGEMENT FOR THERMAL MANAGEMENT OF THERMALLY CONDINTIONED OBJECTS AND A METHOD FOR ASSEMBLING SAME**
ANORDNUNG ZUR THERMISCHEN VERWALTUNG VON THERMISCH KONDITIONIERTEN OBJEKTEN UND VERFAHREN ZU DEREN MONTAGE
AGENCEMENT POUR LA GESTION THERMIQUE D'OBJETS THERMIQUEMENT CONDITIONNÉS ET SON PROCÉDÉ D'ASSEMBLAGE

(30) Priority: 14.11.2018 SE 1851416
(43) Date of publication of application: 20.05.2020
(73) Proprietor: Hydro Extruded Solutions AS, 0240 Oslo (NO)
(72) Inventor: MAREKOVIC, Mikael, 352 61 Växjö (SE)
(74) Representative: Zacco Sweden AB

(56) References cited:
- EP-A1- 0 021 161
- DE-A1- 3 313 740
- JP-U- S5 997 391
- NL-C2- 1 034 648
- US-A1- 2015 034 287

## Description

The present invention relates to an arrangement for thermal management of thermally conditioned objects and a method for assembling same. The arrangement comprises heat exchangers that can be of a thin flat design and made out of extruded aluminium metal or an extruded aluminium alloy, and further being provided with connectors for the inlet and outlet of a medium.

Heat exchangers of thin, flat design can be applied for thermal management of batteries in electrical vehicles (EV's) or for thermal management of other applications where a slim design is required.

In applications as mentioned above, the weight of these kind of systems are of immense importance due to increasing requirements for lowering energy consumption of transportation vehicles. The weight of a thermal management system of this art will be dependent upon several factors such as the weight of the materials of the heat exchangers with tubing and fittings for the flow of the conditioning medium as well as the amount and weight of the conditioning medium itself. In some applications the heat exchanger itself must be constructed with sufficient strength to protect for instance the batteries in an EV.

Commonly, the connectors for guiding flow of a medium to/from the heat exchangers are welded or brazed to the heat exchanger. If the walls of the heat exchanger are thick enough a threaded connector may be applied and fixed by mating threads in the heat exchanger.

However, as there is an increasing demand for lower weight constructions that subsequently has resulted in applications of thinner walls of the heat exchangers, the present invention relates to a totally new design for a connector in a light weight application. The connector of the invention is easy to install and has shown to give sufficient tight and durable connection for low pressurized heat exchangers with thin walls. Further, the connector can be installed by simply drilling a hole through two parallel walls of a closed hollow section and bringing one part of the connector through both holes in the panels from one side and locking the connector from the other side. According to the present invention it is superfluous to bring in a separate support ring or the similar into the hollow section for support. This gives more freedom in the design of the heat exchangers that for instance can be finished as a closed hollow section in the heat exchanger plant, where the adaption and fixation of the connectors can be done on site as the heat exchanger is installed in a vehicle, or it can be done in a separate assembly line.

EP 0 021 161 A1 discloses a connector device for gaseous or liquid media in flat hollow bodies. A spray ring, which has a larger diameter than the bore through the flat hollow body, is plugged between the two boundary surfaces of the hollow body. A connecting socket is then introduced through the interior of this spray ring (and through the flat hollow body), which connecting socket has on one side a pressure plate which bears against one side of a boundary surface of the flat hollow body; the connecting socket is bored through at the level of the spray ring. On the other side of the flat hollow body, the connecting socket bears a counterpressure plate. Via a thread, pressure plate and counterpressure plate press the boundary surfaces of the flat hollow body onto the spray ring in a liquid-tight and gas-tight fashion.

JP 5997391 U discloses an arrangement according to the preamble of claim 1 and describes a connector for inlet and outlet of a medium to and from heat exchangers comprising two parallell plates with a wave-like structure between them and where mounting holes in the plates are of different sizes. The connector comprises a tubular body with a first end and a second end, and further having a centrally arranged bore where the bore has a number of radially oriented ports at said first end communicating with an interior space of a heat exchanger. The body has a cap device with external threads that mates internal threads of the bore. During fixation, a flange of the cap abuts an exterior side of a first wall of the heat exchanger in a sealed manner while the said first end of the tubular body abuts an interior side of said first wall. At the opposite side, the tubular body comprises a flange that abuts in a sealed manner an exterior side of a second wall of the heat exchanger. The second end of the bore comprises a connector for a pipe for conducting the medium.

NL 1034648 discloses a heat exchanger for greenhouses of polycarbonate structure with meander shaped channels formed between two walls. A connection for water inlet / water outlet is disclosed.

US 2016/0064305 A1 discloses a stacked unit including a semiconductor and a plurality of coolers each having a flow passage through which coolant flows for cooling the semiconductor module. A coolant supply-discharge pipe is configured to supply the coolant to the coolers or discharge the coolant from the coolers. The coolers have preshaped holes 13 that is sealably connected with the supply-discharge pipe by O-rings.

According to the present invention there is provided an improved heat exchanger made from an extruded aluminium or aluminium alloy and further with an inlet and outlet design where:
- No bores provided with threads needed in the heat exchanger panels for attachment of connectors, which allows application of thinner panels <6mm
- Connectors fixed by welding / brazing can be omitted
- Connectors can be made of any appropriate material, such as steel, brass, aluminium, composites
- Connectors designed to optimize flow of medium
- The space claimed by the heat exchanger can be reduced due to thinner wall thickness of the panels, which gives more space available in the application, for instance a vehicle, where it is installed
- No need for an inner supporting ring gives more flexibility in production
- Heat exchangers with closed sections can be delivered from plant and connectors assembled at the customer's site Clamping force between the connector and the panel controlled

These and further advantages can be obtained by the invention as defined by the following claims.

The invention will be further described in detail in the following by means of examples and with reference to the attached drawings, where:
- Fig. 1 and 2: shows a first embodiment a cross section view of a connector according to the present invention,
- Fig. 3: shows a first embodiment of two connectors according to the present invention installed in a plate shaped heat exchanger,
- Fig. 4: shows a second embodiment of two connectors according to the present invention installed in a box with a heat exchanger construction in its bottom,
- Fig. 5: shows details of a connector according to the invention during installation in a heat exchanger,
- Fig. 6: shows the connector according to Fig. 5 being installed in the heat exchanger,
- Fig. 7: shows a second embodiment of a connector according to the present invention,
- Fig. 8: shows a third embodiment of a connector according to the present invention,
- Fig. 9: discloses a top cross section view of the embodiment shown in Fig. 8, and in particular how the ports for flow of medium can be arranged.

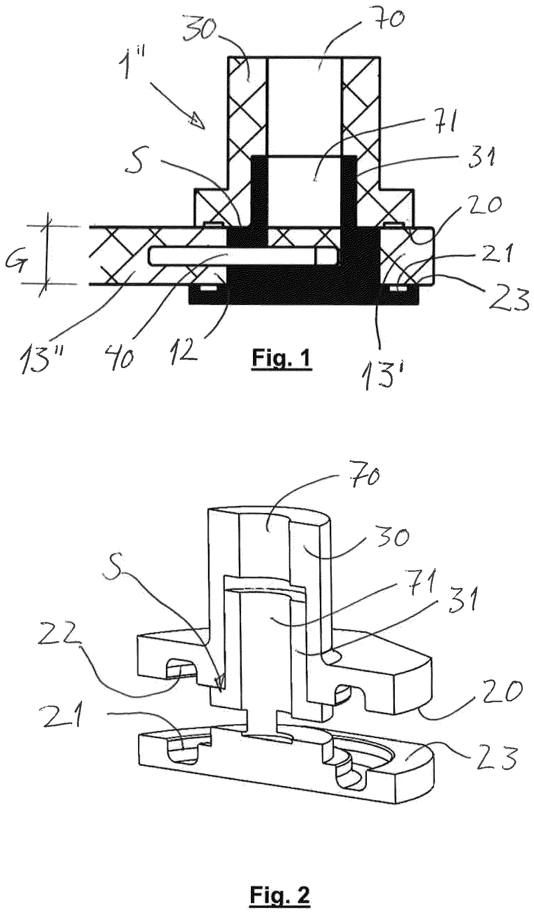

Figure 1 and 2 shows in a cross section view a first embodiment of a connector according to the present invention where a body 30 is mating a cap device 31 by internal / external threads respectively and forms a continuous bore 70, 71 with a port 40. This connector can be applied at a plate shaped heat exchanger having a hole that allows the cap device 31 to pass through it until a flange 23 abuts two parts of the heat exchanger 13', 12 and connects with the body 30. The flange 23 of the cap device 31 is provided with a seal (not shown) in a recess 21, and similarly the body 30 has a flange 20 with a seal (not shown) in a recess 22. The seal can be of any appropriate type and material depending on physical (pressure) and chemical conditions (medium). However, O-rings are preferred. The flanges 20, 23 may in some circumstances be provided without an annular recess for the sealing ring, dependent on the seal design.

Further, the cap device 31 is provided with an abutting seat S that defines a minimum gap G between the flanges 20 and 23. This constructional feature can be of practical importance in an assembly situation where the said predefined gap is adapted to the thickness of the heat exchanger, and thereby securing a predefined clamping force between the connector and the heat exchanger. By this, an optimized compression force on the seal can be achieved, and damage of the sealing parts or even the connection flanges together with the heat exchanger can be avoided. Preferably, the abutting seat can be annular and be shaped as a flange. The flange penetrates both two holes in the heat exchanger.

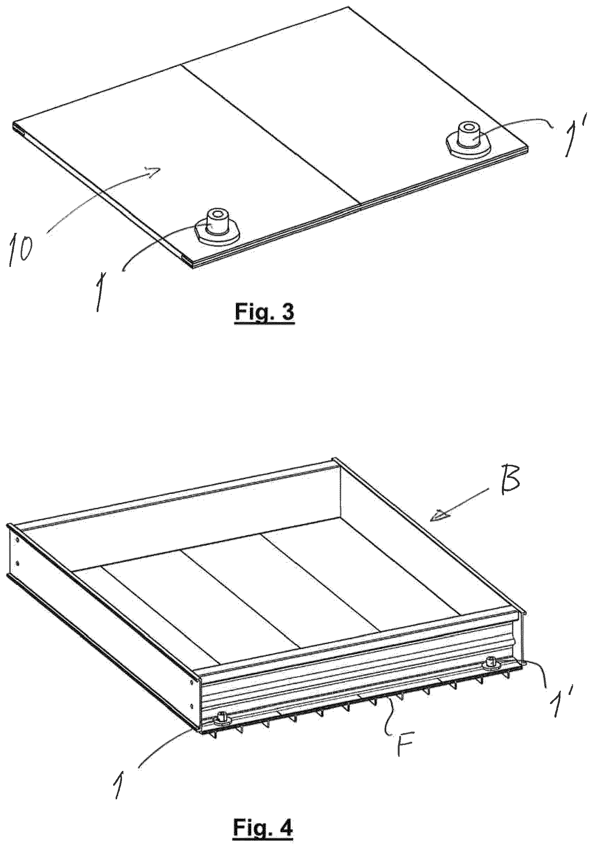

Fig. 3 shows a first embodiment of two connectors 1, 1' according to the present invention installed in a plate shaped heat exchanger 10.

Fig. 4 shows a second embodiment of two connectors 1, 1' according to the present invention installed in a box B with a heat exchanger construction F in its bottom.

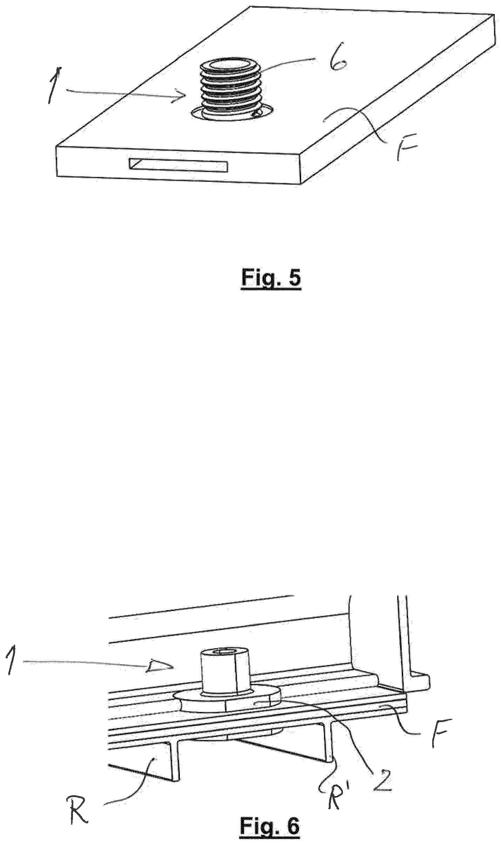

Fig. 5 shows details of a connector 1 according to the invention during installation in a heat exchanger construction F. The connector 1 is entered through a hole in the heat exchanger construction F, and the threads 6 of the connector's body is visible. A cap can be entered and fastened to the connector's end (not shown).

Fig. 6 shows the connector 1 according to Fig. 5 being installed in the heat exchanger construction F by a flange 2 provided with threads. The construction F has reinforcing ribs R, R'.

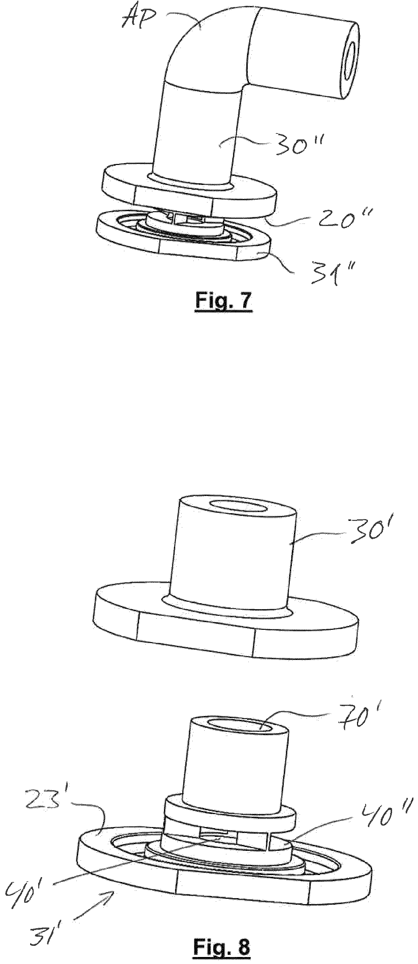

Fig. 7 shows a second embodiment of a connector according to the present invention, where the Fig. shows an isometric view through various parts of it. Here the connector is similar to that of Fig. 4 with a body 30" and a cap device 31" but the body 30" terminates in an angled part AP, preferably 90 degrees, for connector to a pipe or the like. A flange at the body 30" is indicated at 20".

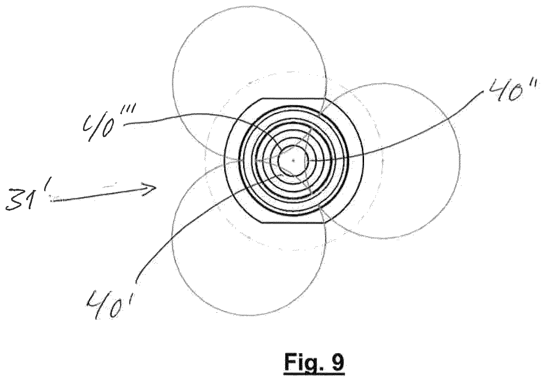

Fig. 8 shows a third embodiment of a connector according to the present invention, where Fig. 9 shows a top cross section view of it. Here the connector is similar to that of Fig. 2 with a body 30' having a flange 20', but it discloses an arrangement of a cap device 31' having several ports that can be cut out by circular processing tools. The cap device 31' has an internal bore 70' that runs through a threaded part and is terminated in a flange 23' which effectively closes the bore there. Three ports 40', 40" and 40"', see also Fig. 9, are arranged in the cap device 31'. The ports can be symmetrical arranged and cover each an equal sector of the cap device 31' for distribution of the medium.

It has proven to be very efficient to arrange the hole for the connector so it partly traverses the actual channel and also a part of compact material, or that the flanges at least partly clamps onto a supporting structure that distribute clamping forces, and being provided with an abutting seat as shown in Figs. 1 and 2. This will secure that the clamping force of the connector is not prone to cause deformation of the walls of the medium channel that in some embodiments can be very thin and fragile due to its light weight construction. In some alternatives a max compression force on the seal is defined, which facilitates the assembly process and gives a reliable connection.

With the present invention is provided an improved heat exchanger design where:
- A thin cold plate for a battery tray has shown to give weight saving of around 6 kg material against initial concept by:
- Equivalent crash results
- Increased thermal performance
- Simplified manufacturing (one side FSW)
- Simplified connectivity for OEM
- Can be used for any type of coolant/refrigeration mediums / fluids i.e. liquids or gases, that are compatible with alloys in the system and the material of the sealings (O-rings)
- Connector should preferably be of the same alloy as of the heat exchanger for recyclability
- Depending on size of coupling and choice of metal in combination with O-ring, different pressures can be achieved
- In the prototypes a through hole was drilled. No other flatness machining was done. However, to reach certain pressures it might require a machined surface (two parallel surfaces)
- Depending on choice of O-ring different flatness tolerances can be applied
- The flanges are provided with an annular recess for a sealing ring
- Constructional features distribute clamping force of connector

The invention is not limited to the examples as described above and shown in the figures but defined by the appended claims.

## Claims

1. Arrangement for thermal management of thermally conditioned objects, such as electric batteries, comprising a plate shaped heat exchanger (10) that includes one or more extruded plate shaped profiles with at least one channel arranged between one first and one second parallel wall (12, 13') of the profile and further having side walls (13', 13"), the arrangement further comprises one or more connectors (1, 1', 1") connected with a hole(s) in said heat exchanger for inlet and outlet of a medium to and from the heat exchanger for heat exchange or heat recovery, the connector (1, 1', 1") comprises a body (30) with a first end and a second end and further having a centrally arranged bore (70) where the bore has at least one radially oriented port (40) that communicates with said at least one channel, and where the first end of the body has a cap device (31) that closes the bore and abuts the first wall (12) in a sealed manner, and where a flange (20) of the body (30) abuts in a sealed manner the second wall (13'), where the second end of the bore has a connector for a pipe for conducting the medium,
**characterised in that**
the body (30) is mating the cap device (31) by internal / external threads respectively and forms a continuous bore (70, 71) with the port (40), wherein the cap device (31) is provided with a seat (S) that abuts the body (30) so it defines a gap (G) between the flange (20) of the body (30) and a flange (23) of the cap device (31) in its assembled position so that a clamping force is distributed via said seat (S).

2. Arrangement according to claim 1,
**characterised in that**
the flange (20) of the connector (1, 1', 1") is an integrated part of the body (30).

3. Arrangment according to claim 1,
**characterised in that**
the said flange (20) of the connector (1, 1', 1") is provided with a seal.

4. Arrangment according to claim 1,
**characterised in that**
the said flange (20) of the connector (1, 1', 1") is provided with an annular recess for a sealing ring.

5. Arrangment according to claim 1,
**characterised in** tha the flange (23) of the cap device (31) is provided with a seal.

6. Arrangment according to claim 1,
**characterised in that**
the said cap device (31) is provided with an annular recess for a sealing ring

7. Arrangement according to claim 1,
**characterised in that**
the second end of the body (30) has an angled portion (AP).

8. Arrangment according to claim 1,
**characterised in that**
the hole for the connector (1, 1') is arranged between reinforcing ribs of the plate shaped heat exchanger (F).

9. A method for assembling the arrangement as defined in claims 1-8,
**characterised in that**
holes of same size are made through the both parallel plates in the plate shaped heat exchanger (10) where the holes further communicates with a channel (14), a suitable connector is selected so that; the cap device (31) itself has a seat, for distribution of clamping forces, where one first part of the connector (1, 1', 1") is entered into the bore(s), whereafter the other part is put together with the first part wherein the parts are fixedly connected together to obtain a sealed connection.

## Patentansprüche

1. Anordnung zur thermischen Verwaltung von thermisch konditionierten Objekten, wie etwa elektrischen Batterien, umfassend einen plattenförmigen Wärmetauscher (10), der ein oder mehrere extrudierte plattenförmige Profile enthält, wobei mindestens ein Kanal zwischen einer ersten und einer zweiten parallelen Wand (12, 13) des Profils angeordnet ist und ferner Seitenwände (13', 13") aufweist, wobei die Anordnung ferner einen oder mehrere Verbinder (1, 1', 1") umfasst, die mit einem Loch bzw. Löchern in dem Wärmetauscher zum Einlass und Auslass eines Mediums zum und vom Wärmetauscher zum Wärmeaustausch oder zur Wärmerückgewinnung verbunden sind, wobei der Verbinder (1, 1', 1") einen Körper (30) mit einem ersten Ende und einem zweiten Ende umfasst und ferner eine zentral angeordnete Bohrung (70) aufweist, wobei die Bohrung mindestens eine, mit dem mindestens einen Kanal in Verbindung stehende, radial ausgerichtete Öffnung (40) aufweist, und wobei das erste Ende des Körpers eine Kappenvorrichtung (31) aufweist, welche die Bohrung schließt und an der ersten Wand (12) dichtend anliegt, und wobei ein Flansch (20) des Körpers (30) an der zweiten Wand (13') dichtend anliegt, wobei das zweite Ende der Bohrung einen Verbinder für ein Rohr zum Leiten des Mediums aufweist,
**dadurch gekennzeichnet, dass**
der Körper (30) mit Hilfe von Innen- bzw. Außengewinden mit der Kappenvorrichtung (31) verknüpft ist und eine kontinuierliche Bohrung (70, 71) mit der Öffnung (40) bildet, wobei die Kappenvorrichtung (31) mit einem Sitz (S) versehen ist, der am Körper (30) derart anliegt, dass er einen Spalt (G) zwischen dem Flansch (20) des Körpers (30) und einem Flansch (23) der Kappenvorrichtung (31) in seiner zusammengebauten Position definiert, so dass eine Klemmkraft über den Sitz (S) verteilt wird.

2. Anordnung nach Anspruch 1,
**dadurch gekennzeichnet, dass**
der Flansch (20) des Verbinders (1, 1', 1") ein integrierter Bestandteil des Körpers (30) ist.

3. Anordnung nach Anspruch 1,
**dadurch gekennzeichnet, dass**
der Flansch (20) des Verbinders (1, 1', 1") mit einer Dichtung versehen ist.

4. Anordnung nach Anspruch 1,
**dadurch gekennzeichnet, dass**
der Flansch (20) des Verbinders (1, 1', 1") mit einer ringförmigen Ausnehmung für einen Dichtungsring versehen ist.

5. Anordnung nach Anspruch 1,
**dadurch gekennzeichnet, dass**
der Flansch (23) der Kappenvorrichtung (31) mit einer Dichtung versehen ist.

6. Anordnung nach Anspruch 1,
**dadurch gekennzeichnet, dass**
die Kappenvorrichtung (31) mit einer ringförmigen Ausnehmung für einen Dichtungsring versehen ist.

7. Anordnung nach Anspruch 1,
**dadurch gekennzeichnet, dass**
das zweite Ende des Körpers (30) einen abgewinkelten Teil (AP) aufweist.

8. Anordnung nach Anspruch 1,
**dadurch gekennzeichnet, dass**
das Loch für den Verbinder (1, 1') zwischen Verstärkungsrippen des plattenförmigen Wärmetauschers (F) angeordnet ist.

9. Verfahren zum Zusammenbauen der Anordnung nach den Ansprüchen 1 bis 8,
**dadurch gekennzeichnet, dass**
Löcher gleicher Größe durch die beiden parallelen Platten in dem plattenförmigen Wärmetauscher (10) erstellt werden, wobei die Löcher ferner mit einem Kanal (14) in Verbindung stehen, ein geeigneter Verbinder derart gewählt wird, dass; die Kappenvorrichtung (31) selbst einen Sitz für die Verteilung von Klemmkräften aufweist, wobei ein erster Teil des Verbinders (1, 1', 1") in die Bohrung(en) eingeführt wird, wonach der zweite Teil mit dem ersten Teil zusammengesetzt wird, wobei die Teile fest miteinander verbunden werden, um eine abgedichtete Verbindung zu erhalten.

## Revendications

1. Agencement pour la gestion thermique d'objets thermiquement conditionnés, tels que des batteries électriques, comprenant un échangeur de chaleur en forme de plaque (10) qui comprend un ou plusieurs profilés en forme de plaque extrudée avec au moins un canal disposé entre une première et une deuxième paroi parallèle (12, 13) du profilé et ayant en outre des parois latérales (13', 13"), l'agencement comprenant en outre un ou plusieurs connecteurs (1, 1', 1") reliés à un ou plusieurs trous dans ledit échangeur de chaleur pour l'entrée et la sortie d'un milieu vers et depuis l'échangeur de chaleur pour l'échange de chaleur ou la récupération de chaleur, le connecteur (1, 1', 1") comprenant un corps (30) avec une première extrémité et une deuxième extrémité et ayant en outre un alésage (70) disposé au centre, l'alésage ayant au moins un orifice orienté radialement (40) qui communique avec ledit au moins un canal, et la première extrémité du corps ayant un dispositif de capuchon (31) qui ferme l'alésage et vient en butée contre la première paroi (12) d'une manière étanche, et une bride (20) du corps (30) venant en butée d'une manière étanche contre la deuxième paroi (13), la deuxième extrémité de l'alésage ayant un connecteur pour un tuyau pour conduire le milieu,
**caractérisé en ce que**
le corps (30) est accouplé au dispositif de capuchon (31) par des filetages respectivement internes / externes et forme un alésage continu (70, 71) avec l'orifice (40), le dispositif de capuchon (31) étant pourvu d'un siège (S) qui vient en butée contre le corps (30) si bien qu'il définit un espace (G) entre la bride (20) du corps (30) et une bride (23) du dispositif de capuchon (31) dans sa position assemblée si bien qu'une force de serrage est distribuée par l'intermédiaire dudit siège (S).

2. Agencement selon la revendication 1,
**caractérisé en ce que**
la bride (20) du connecteur (1, 1', 1") fait partie intégrante du corps (30).

3. Procédé selon la revendication 1,
**caractérisé en ce que**
ladite bride (20) du connecteur (1, 1', 1") est pourvue d'un joint d'étanchéité.

4. Procédé selon la revendication 1,
**caractérisé en ce que**
ladite bride (20) du connecteur (1, 1', 1") est pourvue d'un évidement annulaire pour une bague d'étanchéité.

5. Procédé selon la revendication 1,
**caractérisé en ce que**
la bride (23) du dispositif de capuchon (31) est pourvue d'un joint d'étanchéité.

6. Procédé selon la revendication 1,
**caractérisé en ce que**
ledit dispositif de capuchon (31) est pourvu d'un évidement annulaire pour une bague d'étanchéité.

7. Agencement selon la revendication 1,
**caractérisé en ce que**
la deuxième extrémité du corps (30) a une partie coudée (AP).

8. Agencement selon la revendication 1,
**caractérisé en ce que**
le trou pour le connecteur (1, 1') est disposé entre des nervures de renforcement de l'échangeur de chaleur en forme de plaque (F).

9. Procédé pour assembler l'agencement tel que défini dans les revendications 1 à 8,
**caractérisé en ce que**
des trous de même taille sont réalisés à travers les deux plaques parallèles dans l'échangeur de chaleur en forme de plaque (10) où les trous communiquent en outre avec un canal (14), un connecteur approprié étant sélectionné si bien que ; le dispositif de capuchon (31) lui-même a un siège, pour la répartition des forces de serrage, une première partie du connecteur (1, 1', 1") étant introduite dans le ou les alésages, ensuite l'autre partie est assemblée avec la première partie, les parties étant reliées l'une à l'autre de manière fixe pour obtenir une connexion étanche.
